# EUROPÄISCHE PATENTSCHRIFT

(11) **EP 3 898 323 B1**
(45) Veröffentlichungstag und Bekanntmachung des Hinweises auf die Patenterteilung: **09.08.2023**
(21) Anmeldenummer: 19835390.6
(22) Anmeldetag: 19.12.2019
(51) Int. Cl.: B60N 2/90, B60N 2/02, B60N 2/28

(54) **AUXETISCHE VERSTELLEINRICHTUNG**
AUXETIC ADJUSTING DEVICE
DISPOSITIF D'AJUSTEMENT AUXÉTIQUE

(30) Priorität: 21.12.2018 DE 102018133405
(43) Veröffentlichungstag der Anmeldung: 27.10.2021
(73) Patentinhaber: Brose Sitech GmbH, 38442 Wolfsburg (DE); VOLKSWAGEN AG, 38440 Wolfsburg (DE)
(72) Erfinder: BARKOW, Tomas, 38102 Braunschweig (DE); KOHLHASE, Jens, 38102 Braunschweig (DE); STEITZ, Sebastian, 38464 Groß Twülpstedt (DE); SCHWEISSGUT-FORKEL, Silke, 38542 Leiferde (DE)
(74) Vertreter: Gulde & Partner
(86) Internationale Anmeldenummer: PCT/EP2019/086427
(87) Internationale Veröffentlichungsnummer: WO 2020/127810

(56) Entgegenhaltungen:
- US-A1- 2011 059 291
- US-A1- 2018 311 833

## Beschreibung

Die Erfindung betrifft die Verwendung einer auxetischen Struktur.

Allgemein bekannt ist es, dass Materialien, wenn sie auseinandergezogen werden, in der Mitte dünner werden, da sie sich mit der Ziehrichtung weiten. Auxetische Materialien [vergleiche https://de.wikipedia.org/wiki/Auxetisches_Material#cite_note-3dagegen] werden in der Mitte dicker, wenn an ihnen gezogen wird; sie weiten sich quer zur Zugrichtung. Eine beispielsweise wabenartige Struktur mit vielen Zwischenräumen wird so angeordnet, dass bei einer mechanischen Reaktion das Material in die Breite statt in die Länge verändert wird.

Dreidimensionale auxetische Materialien weiten sich somit in alle Richtungen quer zur Zugrichtung. Dabei handelt es sich um Strukturen, die dem Material die auxetischen Eigenschaften verleihen, nicht um den dafür verwendeten Werkstoff. Es gibt Materialien, die von Natur aus solche Strukturen aufweisen, und Materialien, die künstlich in eine auxetische Struktur gebracht werden, wie die bekannte Rauten-Falt-Struktur eines der ersten künstlich hergestellten auxetischen Strukturen, die unabhängig vom Material aus einer Fläche erzeugt wird. Der Rauten-Falt-Struktur (RFS) liegt gemäß der oben genannten Quelle eine Hebelmechanik mit einer nicht linearen mechanischen Reaktion zugrunde.

Die Druckschrift DE 11 2006 000 538 T5 beschreibt eine Energieabsorptionsanordnung, aufweisend eine starre Stützstruktur mit einer Einlassöffnung, eine flexible Abdeckung, die mit der starren Stützstruktur in Eingriff steht, um einen expandierbaren inneren Bereich zu definieren, eine Fluidquelle in Fluidverbindung mit der Einlassöffnung, und ein Zellengitter, das in dem expandierbaren inneren Bereich angeordnet ist, wobei das Zellengitter ein Formgedächtnismaterial umfasst, das geeignet ist, um in Ansprechen auf die Fluidverbindung mit der Fluidquelle von einer ersten Konfiguration in eine expandierte Konfiguration zu expandieren. In einer Ausgestaltung ist vorgesehen, dass eine Zelleinheit des Zellengitters eine auxetische Geometrie umfasst. Es wird zudem offenbart, dass eine Zelleinheit des Zellengitters bevorzugt Sechsecke oder Rauten sind.

Die Druckschrift DE 10 2016 013 923 A1 offenbart einen Fahrzeugsitz mit einer Insassenschutzvorrichtung zur Verringerung eines Risikos eines Unterdurchrutschens unter einem Beckengurtabschnitt eines angelegten Sicherheitsgurtes im Kollisionsfall eines Fahrzeuges. In einem Bereich eines eine Sitzfläche bildenden Sitzpolsters ist ein in seiner Festigkeit und/oder seiner Form veränderbarer Schaum angeordnet, welcher mit einer Konditionierungsvorrichtung in Form einer Gaszuführung in unmittelbarer Wirkverbindung steht, wobei der Schaum durch Aktivierung der Konditionierungsvorrichtung eine Sitzrampe bildet. Vorgesehen ist, dass der Schaum ein viskoelastisches und/oder auxetisches Material umfasst. Die Druckschrift DE 10 2016 010 929 A1 erläutert einen Fahrzeugsitz mit einer Sitzlehne und einem eine Sitzfläche bildenden Sitzpolster, in welchem ein eine Sitzrampe bildender Sitzkeil angeordnet ist, wobei der Sitzkeil aus einem auxetischen Material gebildet ist, insbesondere ist der Sitzkeil aus einem auxetischen Schaum ausgebildet vorgesehen ist, dass sich eine Höhe des Sitzkeiles in Richtung der Sitzlehne verringert. In der Druckschrift werden die auxetischen Strukturen zur Energieaufnahme verwendet. Mit anderen Worten, die auxetischen Strukturen wirken in oder entgegen der Belastungsrichtung.

Als weiteren Stand der Technik werden die Druckschriften US 2011/059291A1 und die Druckschrift US 2018/311 833 A1 genannt.

Der Erfindung liegt nun die Aufgabe zugrunde, eine auxetische Struktur auf eine nicht herkömmliche Art und Weise zu nutzen.

Im Unterschied zu der bisherigen Verwendung einer auxetischen Struktur als Energieabsorptionselement ist erfindungsgemäß vorgesehen, dass die auxetische Struktur als Verstelleinrichtung verwendet wird.

2. Dazu ist vorgesehen eine auxetische Verstelleinrichtung nach dem Gegenstand des Anspruchs 1 auszubilden, die zumindest teilweise eine auxetische Zellenstruktur umfasst, die mehrere eine vorgebbare Geometrie aufweisende Zelleneinheiten aufweist, wobei der auxetischen Zellenstruktur in einer Ausgangsposition der Verstelleinrichtung eine Aktionsrichtung zugeordnet ist, wobei ein Aktor zur Verstellung der auxetischen Zellenstruktur in Aktionsrichtung eine Aktionskraft auf die auxetische Zellenstruktur ausübt, die quer zur Aktionskraft eine auxetische Reaktion der auxetischen Zellenstruktur in eine Verstellposition auf einer Reaktionsachse in Reaktionsrichtung bewirkt, die als Verstellachse in einer Verstellrichtung der Verstelleinrichtung vorgesehen ist, wobei die Zelleneinheiten der Zellenstruktur über mindestens ein Gelenk miteinander verbunden sind, wobei erfindungsgemäß die Zelleneinheiten der Zellenstruktur über mindestens ein Gelenk mit mindestens einem randseitig der Zellenstruktur angeordneten Stützelement miteinander verbunden sind. Kerngedanke der Erfindung ist die Verwendung der auxetischen Verstelleinrichtung nach den Ansprüchen 8 und 9.

Vorzugsweise ist vorgesehen, dass die Zelleneinheiten der Zellenstruktur über das mindestens eine Gelenk mit mindestens einer randseitig der Zellenstruktur angeordneten Stützplatte als Stützelement miteinander verbunden sind.

Vorzugsweise bildet zumindest die auxetische Zellenstruktur und/oder die durch die Zelleneinheiten selbst oder durch die Zelleneinheiten selbst und das mindestens eine Gelenk eine Stützstruktur, die im Wesentlichen orthogonal als Normalvektor zu der Flächenebene der auxetischen Zellenstruktur eine Abstützkraft bildet, der im Wesentlichen orthogonal zu der Ebene liegt, welche durch die in Aktionsrichtung und Reaktionsrichtung definierte Flächenebene der auxetischen Zellenstruktur gebildet wird.

Die zumindest teilweise auxetische Verstelleinrichtung zeichnet sich ferner dadurch aus, dass alle zuvor genannten Ausführungsformen derart ausgestaltet werden können, dass die Zelleneinheiten der Zellenstruktur mindestens in einer Ebene als Flächenelemente ausgebildet sind.

Vorgesehen ist ferner bevorzugt, dass die mindestens eine Ebene der als Flächenelemente ausgebildeten Zelleneinheiten der Zellenstruktur eine Auflageebene bildet, wodurch die Verstelleinrichtung in vorteilhafter Weise als Verstell- und Trageinrichtung für ein angrenzendes Bauteil einsetzbar ist.

Das angrenzende Bauteil ist ein weiteres Strukturteil eines Fahrzeugsitzes/Kindersitzes oder beispielsweise ein Schaum als Polster der jeweiligen Komponente, wobei die Verstell- und Trageinrichtung unter dem Schaum der Verstell- und Trageinrichtung der in dem Schaum als Verstell- und Trageinrichtung angeordnet ist.

Vorgesehen ist zudem bevorzugt, dass die mindestens eine Ebene der als Flächenelemente ausgebildeten Zelleneinheiten der auxetischen Zellenstruktur eine Auflageebene bildet, wodurch die Verstelleinrichtung als Verstell- und Trageinrichtung für ein angrenzendes Bauteil, insbesondere den Polster-Schaum einsetzbar ist.

Fertigungstechnisch wird vorgeschlagen, dass die auxetische Zellenstruktur und die mindestens eine Stützplatte und das mindestens eine Gelenk aus einem einteiligen oder mehrteiligen Spritzgussteil ausgebildet ist/sind, wodurch eine preiswerte Serienfertigung möglich ist.

In vorteilhafter Weise werden somit Verstelleinrichtungen geschaffen, die auf herkömmliche Weise nur mithilfe von mehreren Bauteilen und zusätzlichen Führungen ausbildbar sind. Dadurch werden in vorteilhafter Weise Bauteile und Führungen eingespart, sodass es zu einer Gewichtreduzierung kommt, insbesondere auch dadurch, dass ein Kunststoff im Spritzguss-Fertigungsverfahren verwendet wird.

Die Erfindung wird anhand der zugehörigen Zeichnungen erläutert. Es zeigen:
- Figur 1A: eine schematisch dargestellte Schicht einer auxetischen Zellenstruktur, deren Zelleneinheiten aus Rechtecken und Zylindern ausgebildet sind;
- Figur 1B: eine schematisch dargestellte Schicht einer auxetischen Zellenstruktur, deren Zelleneinheiten aus Dreiecken ausgebildet sind;
- Figur 1C: eine schematisch dargestellte Schicht einer auxetischen Zellenstruktur, deren Zelleneinheiten aus Kreuzen ausgebildet sind;
- Figur 1D: eine schematisch dargestellte Schicht einer auxetischen Zellenstruktur, deren Zelleneinheiten aus Doppelkegeln ausgebildet sind;
- Figur 1E: eine schematisch dargestellte Schicht einer auxetischen Zellenstruktur, deren Zelleneinheiten aus Sternen ausgebildet sind;
- Figur 2A: eine modellhaft dargestellte perspektivische Ansicht einer erfindungsgemäßen auxetischen Zellenstruktur in einer Ausgangsposition;
- Figur 2B: die erfindungsgemäße auxetische Zellenstruktur in einer modellhaft dargestellten perspektivischen Ansicht in ihrer Verstellposition;
- Figur 3: die erfindungsgemäße auxetische Zellenstruktur in der Ausgangsposition gemäß Figur 2A mit Zelleneinheiten, die als Flächenelemente ausgebildet sind;
- Figur 4: eine schematisch dargestellte Schicht einer erfindungsgemäßen auxetischen/ nicht-auxetischen Zellenstruktur in einer Kombination von auxetischen und nichtauxetischen Zelleneinheiten;
- Figur 5: eine modellhaft dargestellte perspektivische Ansicht der erfindungsgemäßen auxetischen Zellenstruktur gemäß Figur 2A in ihrer Ausgangsposition mit Darstellung der Zelleneinheiten, die hinsichtlich ihrer (Schicht-)Höhe variieren; und
- Figur 6: eine schematische Darstellung eines Anwendungsbeispiel in dem eine auxetische Zellenstruktur als Sitztiefen-Verstelleinrichtungs-Modul verwendet wird.

Für die Zwecke der Beschreibung soll eine horizontale Richtung einer Zellenstruktur ZS mit "x" bezeichnet werden. Mit "y" wird die Richtung in der Horizontalen orthogonal zur x-Richtung bezeichnet (x und y bilden somit ein horizontale x/y-Ebene), und mit "z" wird die Richtung in der Vertikalen der Zellenstruktur ZS orthogonal zur x-Richtung beziehungsweise y-Richtung bezeichnet.

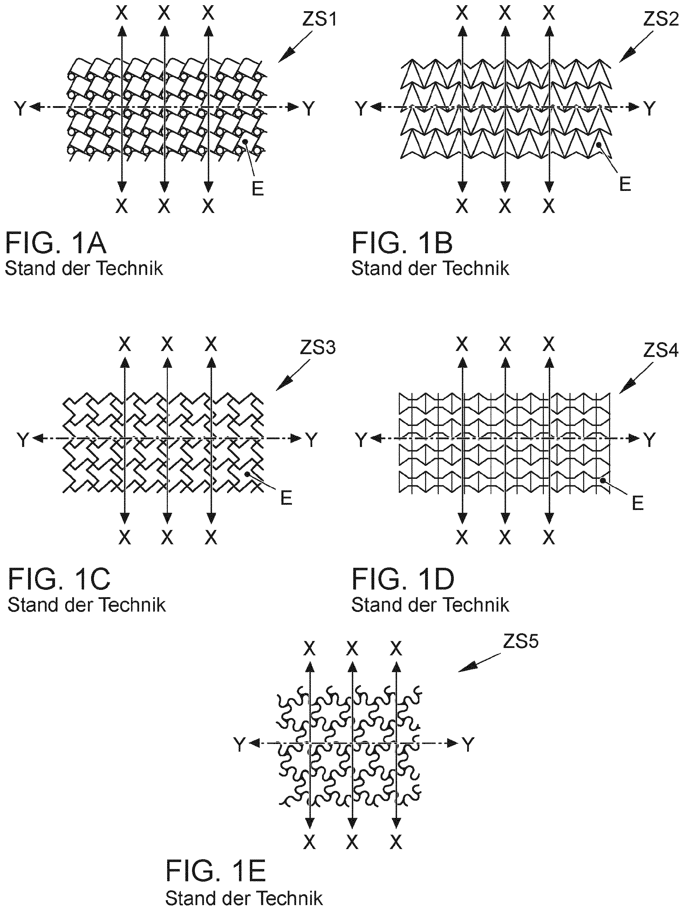

Die Figuren 1A bis 1E zeigen in schematischen Darstellungen verschiedene Schichten von auxetischen Zellenstrukturen ZS1 bis ZS5, die prinzipiell gemäß der nachfolgend erläuterten erfindungsgemäßen auxetischen Verstellstruktur 10 wahlweise einzeln oder in Kombination einsetzbar sind.

In den Figuren 1A bis 1E ist jeweils eine Strich-Punkt-Linie dargestellt, die zur Erläuterung der Wirkungsweise der auxetischen Verstelleinrichtung 10 einer Zugkraftrichtung Y entspricht.

Bei der Erfindung wird von einer schichtartigen auxetischen Verstellstruktur 10 ausgegangen, die nur eine Schicht aufweist. Mit anderen Worten, die Schicht der auxetischen Verstellstruktur 10 erstreckt sich in zwei Dimensionen in einer gedachten Ebene (x/y-Ebene), beispielsweise in x-Richtung und y-Richtung, wobei sich die Schichthöhe, die der Höhe einer Zelleneinheit entspricht, in z-Richtung erstreckt.

In der Schicht sind die Zelleneinheiten E der auxetischen Zellenstrukturen ZS1 bis ZS5 gemäß der Figuren 1A bis 1E somit als kleinste Einheit der Zellenstrukturen ZS1 bis ZS5 angeordnet.

Mehrere miteinander verbundene Schichten ergeben eine dreidimensionale auxetische Zellenstruktur.

In der schematischen Darstellung der Figur 1A ist die Schicht der auxetischen Zellenstruktur ZS1 aus Rechtecken und Zylindern als Zelleneinheiten E aufgebaut.

In der schematischen Darstellung der Figur 1B ist die Schicht der auxetischen Zellenstruktur ZS2 aus Dreiecken als Zelleneinheiten E aufgebaut.

In der schematischen Darstellung der Figur 1C ist die Schicht der auxetischen Zellenstruktur ZS3 aus Kreuzen als Zelleneinheiten E aufgebaut.

In der schematischen Darstellung der Figur 1D ist die Schicht der auxetischen Zellenstruktur ZS4 aus Doppelkegeln als Zelleneinheiten E aufgebaut.

In der schematischen Darstellung Figur 1E ist die Schicht der auxetischen Zellenstruktur ZS5 aus Sternen als Zelleneinheiten E aufgebaut.

Die Schichten der auxetischen Zellenstrukturen ZS1 bis ZS5 werden durch Aufbringung einer Zugkraft in Richtung der Zugkraftachse Y quer zur Zugkraftachse Y in x-Richtung breiter, wie durch die X-Achsen X symbolisiert ist.

Die Y-Achse stellt somit die Aktionsachse der wirkenden Aktionskraft und die X-Achsen stellen die Reaktionsachsen der auxetischen Zellenstrukturen ZS1 bis ZS5 dar.

Anders als dargestellt ist es möglich, dass eine Druckkraft als Aktionskraft Fz in Richtung der Achse Y auf die jeweilige Zellenstruktur ZS1 bis ZS5 ausgeübt wird, wobei die auxetischen Zellenstrukturen ZS1 bis ZS5 quer zu der Achse Y in x-Richtung schmaler werden, das heißt, die X-Achse stellt ebenfalls die Reaktionsachse der jeweiligen auxetischen Zellenstrukturen ZS1 bis ZS5 dar.

Ausgehend von diesen einleitenden Erläuterungen wird erfindungsgemäß eine Verstelleinrichtung 10 vorgeschlagen, die als Verstelleinrichtung in mindestens einer Komponente eines nicht näher dargestellten Fahrzeugsitzes angeordnet ist. Die zu dem Fahrzeugsitz beschriebenen Merkmale sind erfindungsgemäß analog auf einen Kindersitz übertragbar. Die Verstelleinrichtung trägt im Anwendungsfall ein anderes Bauteil, insbesondere einen Schaum oder ist mit einer Mechanik verbunden, welche die Verstellbewegung überträgt.

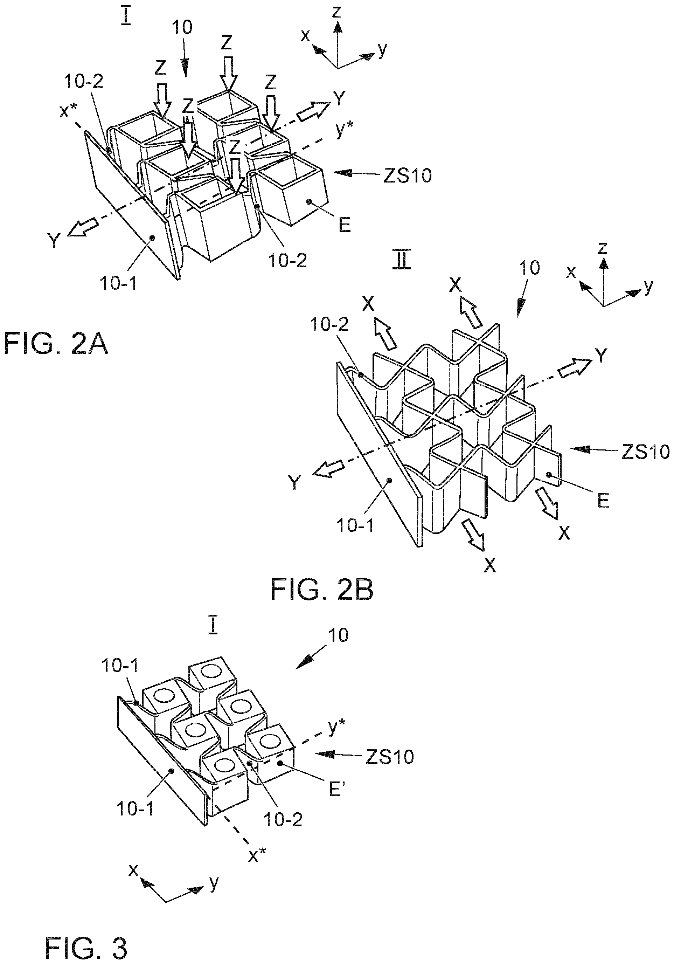

Die Figur 2A zeigt in einer perspektivischen Darstellung in beispielhafter Weise von den Figuren 1A und 1C ausgehend eine auxetischen Zellenstruktur ZS10 in einer unverstellten Ausgangsposition I als Verstellstruktur 10, die aus Rechtecken aufgebaut ist.

An den Rechtecken ist quer zu der Zugkraftachse Y mindestens ein Stützelement, insbesondere in der Art einer Stützplatte 10-1 angeordnet, wobei nur eine von mehreren randseitig anordbaren Stützplatten 10-1 gezeigt ist.

Über die Stützplatten 10-1 wird gemäß dem gewählten Ausführungsbeispiel eine Zugkraft als Aktionskraft Fz in Aktionsrichtung in Richtung Zugkraftachse Y zumindest einseitig bevorzugt zweiseitig auf die auxetische Zellenstruktur ZS10 übertragen.

Es versteht sich, dass analog dazu eine Druckkraft als Aktionskraft Fz in Aktionsrichtung einseitig bevorzugt zweiseitig auf die auxetische Zellenstruktur ZS10 übertragen werden kann, die analog dazu in Richtung der Zugkraftachse Y wirkt und die zuvor beschriebenen Effekte in Richtung der Reaktionsachsen auslöst.

Die Figur 1C zeigt einen Kreuzungspunkt KP von vier Zelleneinheiten E, der in der erfindungsgemäßen auxetischen Zellenstruktur ZS10 an vier aneinander liegenden Eckpunkten der Rechtecke, welche die kleinsten Zelleneinheiten E bilden, angeordnet sind.

Die erfindungsgemäße Verstelleinrichtung 10 kann derart aufgebaut sein, dass der Kreuzungspunkt KP analog zu der Figur 1C gebildet ist, wobei die Stützplatte/n 10-1 direkt an den rechteckigen Zelleneinheiten E anliegt.

In der bevorzugten Ausgestaltung gemäß der Figur 2A wird der direkte Kreuzungspunkt KP sozusagen aufgelöst, da zwischen den rechteckigen Zelleneinheiten E und zwischen den rechteckigen Zelleneinheiten E und der/den Stützplatte/n 10-1 mindestens ein Gelenk, insbesondere ein Scharnier 10-2 in der Art von Filmscharnieren ausgebildet ist, wobei nur zwei der Scharniere 10-2 mit Bezugszeichen versehen sind. Mit anderen Worten, der Kreuzungspunkt KP liegt im Raum zwischen den vier Eckpunkten der rechteckigen Zelleneinheiten E.

Durch die Anordnung von Scharnieren 10-2 zwischen den rechteckigen Zelleneinheiten E wird die Elastizität der auxetischen Zellenstruktur ZS10 erhöht, das heißt, die Verstellbarkeit (von der Ausgangsposition I in die Verstellposition II) und die geometrische Anpassungsfähigkeit der auxetischen Zellenstruktur ZS10 an andere Körper wird verbessert.

Durch die Anordnung der Scharniere 10-2 in der Art von Filmscharnieren wird zudem die Verstelleinrichtung 10 quer zu der in der x/y-Ebene liegenden Schicht stabilisiert. Mit anderen Worten, die auxetische Verstelleinrichtung 10 kann Kräfte, die aus Z-Richtung auf sie einwirken, besser aufnehmen, wie anhand der Kraftpfeile der Abstützkraft in Kraftrichtung entlang der Z-Achse verdeutlicht wird. In vorteilhafter Weise bildet die auxetische Zellenstruktur ZS10 durch die Zelleneinheiten selbst oder durch die Zelleneinheiten und die Gelenke, mithin die Scharniere 10-2 eine Stützstruktur. Die Stützstruktur hat den Vorteil, dass bei Einwirken einer Kraft auf die auxetische Zellenstruktur ZS10 eine entgegenwirkende Abstützkraft der Stützstruktur vorliegt.

Dabei wirkt die Abstützkraft in z-Richtung im Wesentlichen normal als Normalvektor zu der Flächenebene (x/y-Ebene) beziehungsweise Schichtebene der auxetischen Zellenstruktur ZS10, das heißt im Wesentlichen orthogonal zu der in der x/y-Ebene liegenden Schicht, die durch die nachfolgend erläuterte Aktionsachse der wirkenden Aktionskraft Fz und die X-Achsen als Reaktionsachsen der auxetischen Zellenstruktur ZS10 definiert ist.

Die Figur 2B zeigt in einer perspektivischen Darstellung in beispielhafter Weise von den Figuren 1A und 1C ausgehend die auxetische Zellenstruktur ZS10 als Verstelleinrichtung 10 in der Verstellposition II.

In Figur 2B wird verdeutlicht, dass die auxetische Zellenstruktur ZS10 durch Aufbringung einer Zugkraft in Richtung der Zugkraftachse Y quer zur Zugkraftachse Y in x-Richtung breiter wird, wie durch die X-Achsen X symbolisiert ist.

Die Y-Achse stellt somit die Aktionsachse der wirkenden Aktionskraft F_{Z} und die X-Achsen stellen die Reaktionsachsen der auxetischen Zellenstrukturen ZS1 bis ZS5 dar.

Im gewählten erfindungsgemäßen Ausführungsbeispiel wird die Zugkraft Fz über die mindestens eine Stützplatte/n 10-1 gleichmäßig auf die auxetische Zellenstruktur ZS10 übertragen, indem die Scharniere 10-2 in der Art von Filmscharnieren die Kraftwirkung auf die rechteckigen Zelleneinheiten E mechanisch übertragen, wobei die Übertragung von Zelleneinheit zu Zelleneinheit ebenfalls über die Scharniere 10-2 in der Art von Filmscharnieren erfolgt. Die Scharniere 10-2 erzielen dabei die beschriebene Wirkung.

Figur 3 zeigt, dass die auxetische Zellenstruktur ZS10 in der Ausgangsposition I gemäß Figur 2A aus Zelleneinheiten E ausgebildet ist, die in mindestens einer Auflage oder Stützebene, insbesondere der gezeigten x/y-Ebene als Flächenelemente E' liegen, sodass ein Schaum und/oder ein Bezug besser auf der Verstelleinrichtung 10 eines auf oder an der Verstelleinrichtung 10 angeordneten Polsterteils des Fahrzeugsitzes befestigt beziehungsweise aufgelegt werden kann.

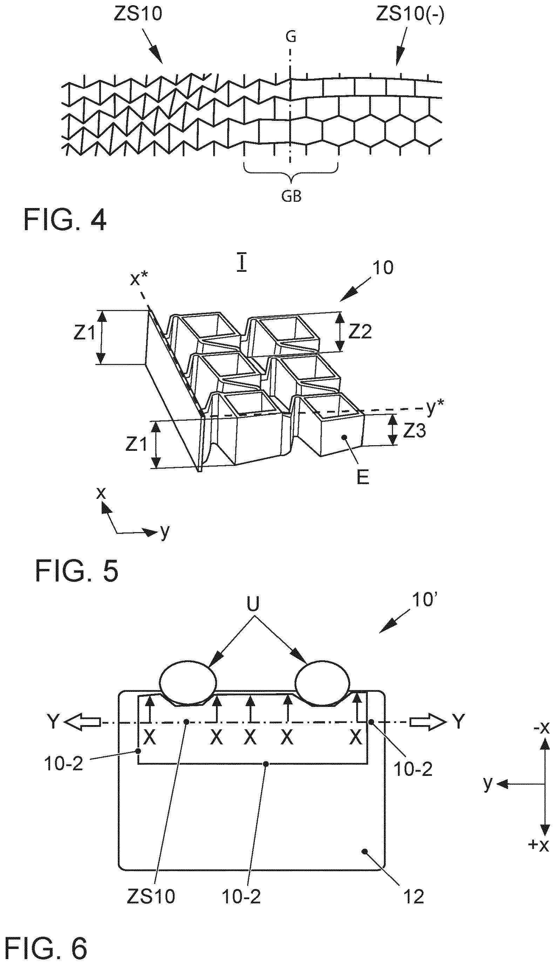

Figur 4 verdeutlicht, dass die auxetische Zellenstruktur ZS10 mit nicht-auxetischen Zellenstrukturen ZS10(-) kombinierbar ist. Mit anderen Worten, die Verstelleinrichtung 10 umfasst beispielsweise auf einer Seite einer Grenzlinie G oder eines Grenzbereiches GB eine auxetische Zellenstruktur ZS10 und auf der anderen Seite der Grenzlinie G oder eines Grenzbereiches GB eine nicht-auxetische Zellenstruktur, die mit dem Bezugszeichen ZS10(-) bezeichnet wird.

Figur 5 zeigt, wie in den Figuren 2A und 2B bereits gezeigt, dass die Zelleneinheiten E der auxetischen Zellenstruktur ZS10 unterschiedliche (Schicht-)Höhen Z1, Z, Z3 aufweisen kann. Dadurch sind einer x*/y*-Auflageebene (vergleiche auch Figur 2A, Figur 3) der auxetischen Zellenstrukturen ZS10 geometrisch angepasste Verstelleinrichtung 10 ausbildbar. Im Ausführungsbeispiel weisen die Stützplatte 10-1 und die angrenzenden Zelleneinheiten E die Höhe Z1 auf, während weitere Zelleneinheiten E je nach Anwendungsfall andere Höhen Z2, Z3 aufweisen können.

Zudem können die Wandstärken der Zelleneinheiten E derart variieren (nicht dargestellt), dass in Bereichen höherer Belastungen, also in Bereichen, in denen höhere Kräfte auftreten, große oder größere Wandstärken, und in Bereichen, in denen geringere Kräfte auftreten, kleine beziehungsweise kleinere Wandstärken ausgebildet sind.

Die Höhenauswahl und Wandstärkenauswahl erfolgt in bevorzugter Ausgestaltung der Erfindung in Kombination in Abhängigkeit der Höhe der auf die auxetischen Zellenstruktur ZS10 auftretenden Kräfte. Die Höhenauswahl und Wandstärkenauswahl in Abhängigkeit der auftretenden Kräfte trifft im Übrigen auch auf eine nicht-auxetische Zellenstruktur ZS10(-) zu, die in Kombination mit der auxetischen Zellenstruktur ZS10 eingesetzt wird.

Die beschriebene auxetische Zellenstruktur ZS10 oder eine Kombination der beschriebenen auxetischen Zellenstruktur ZS10 mit einer nicht-auxetischen Zellenstruktur ZS10(-) kann in einem Fahrzeugsitz oder analog in einem Kindersitz in vielfältiger Weise als Verstelleinrichtung 10 verwendet werden, wie nachfolgend noch weiter erläutert wird.

Die Verstellstruktur 10 kann vollflächig als Tragstruktur eines Sitzteils und/oder eines Rückenlehnenteils und/oder eines Kopfstütze und/oder einer Seitenwange oder mit anderen Worten in jeder Komponente des Fahrzeugsitzes oder Kindersitzes als Verstelleinrichtung 10 eingesetzt werden.

Die Verstelleinrichtung 10 kann dabei unterhalb eines Schaumes oder in dem Schaum der jeweiligen Komponente angeordnet sein.

Ist die Verstelleinrichtung 10 unterhalb eines Schaumes angeordnet, bietet die erläuterte x*/y*-Auflageebene (vergleiche Figuren 2A und 3) in vorteilhafter Weise eine Auflagefläche, die wie erläutert variiert werden kann.

Je nach Ausrichtung der Aktionsachse und der Reaktionsachse kann eine Sitzbreite oder eine Sitzhöhe oder eine Sitztiefe eines Sitzteils oder eine Rückenlehnenbreite oder eine Rückenlehnenhöhe oder eine Rückenlehnentiefe eines Rückenlehnenteils oder eine Kopfstützenbreite oder eine Kopfstützenhöhe oder eine Kopfstützentiefe einer Kopfstütze oder eine Seitenwangenbreite oder eine Seitenwangenhöhe oder eine Seitenwangentiefe einer Seitenwange eingestellt werden.

Figur 6 zeigt beispielhaft die Verwendung einer Verstelleinrichtung 10 als Sitztiefen-Verstelleinrichtung 10`. Die Sitztiefen-Verstelleinrichtung 10` ist im Ausführungsbeispiel ein Modul, welches im vorderen Bereich eines Sitzteils 12 angeordnet ist.

Figur 6 zeigt einen Schnitt durch ein Sitzteil 12 in einer horizontalen x/y-Ebene, der durch eine auxetische Zellenstruktur ZS10 verläuft, der jeweils seitlich in Richtung der Zugkraftachse Y bewegliche Stützplatten 10-1 beispielsweise analog zu den Figuren 2A, 2B, 3, 5 zugeordnet sind. Zwischen den Stützplatten 10-1 liegt die auxetische Zellenstruktur ZS10 nahe einer vorderen Stirnseite des gegebenenfalls gepolsterten Sitzteils 12. Das Modul 10` weist an der vorderen Stirnseite des Sitzteils 12 keine Stützplatte 10-1 auf.

Die x*/y*-Auflageebene der auxetischen Zellenstruktur ZS10 liegt oberhalb der Blattebene, sodass in der Blattebene die Unterschenkel U einer aufsitzenden Person als Schnitt dargestellt sind.

Die Unterschenkel U der aufsitzenden Person liegen in der normalen Anordnung eines Fahrzeugsitzes in einem Fahrzeug auf der in Fahrtrichtung -x liegenden Frontseite des Sitzteils 12 an. Auf der gegenüberliegenden Seite +x entgegen der Fahrtrichtung weist das Sitztiefen-Verstelleinrichtungs-Modul 10' eine weitere Stützplatte 10-1 auf, die nicht verstellbar mithin ortsfest angeordnet ist.

Bei diesem Ausführungsbeispiel ist das Sitztiefen-Verstelleinrichtungs-Modul 10` in dem Schaum des Sitzteils 12 angeordnet.

Setzt sich jetzt eine Person gemäß der Blickrichtung des die Figur 6 ansehenden Betrachters auf das Sitzteil 12, so wird die auxetische Zellenstruktur ZS10 die Unterseite der Oberschenkel der aufsitzenden Person, wie oben erläutert, aufnehmen, wobei die auxetische Zellenstruktur ZS10 an sich stabil bleibt und somit in vorteilhafter Weise gleichzeitig als Tragstruktur dient. Dabei passt sich die auxetische Zellenstruktur ZS10 in vorteilhafter Weise je nach Körpergewicht und spezifischen Aufbau der auxetischen Zellenstruktur ZS10 an die Geometrie der Unterseite der Oberschenkel der Person an, jedoch ohne dass eine auxetische Verstellung in eine der Richtungen der horizontalen x/y-Ebene erfolgt.

Gleichzeitig oder unabhängig davon kann eine Rückseite der dargestellten Unterschenkel mit der vorderen Stirnseite des Sitzteils 12 in Kontakt kommen und den Schaum des Sitzteils 12 nach hinten in +x-Richtung eindrücken, sodass die auxetische Zellenstruktur ZS10 stirnseitig in +x-Richtung entgegen der Fahrtrichtung -x unter Druck gerät, wodurch sich die auxetische Zellenstruktur ZS10 an die Rückseite der dargestellten Unterschenkel anpasst.

Erfindungsgemäß kann die aufsitzende Person jetzt eine individuelle Sitztiefenverstellung vornehmen, indem mindestens eine seitliche Stützplatte 10-1 vorzugsweise beide seitlichen Stützplatten 10-1 in Aktionsrichtung in Richtung der Zugkraftachse/n Y bewegt wird/werden, mithin gezogen wird. Mittels dem Sitztiefen-Verstelleinrichtungs-Modul 10` wird die auxetische Zellenstruktur ZS10 quer zu der Zugkraftachse Y (in -x-Richtung) in Reaktionsrichtung -x gemäß der Verstellachse X breiter, das heißt die Sitztiefe wird verstellt, wie durch die in Figur 6 dargestellten mehreren X-Achsen X in die Reaktionsrichtung/Verstellrichtung symbolisiert wird.

Es wird vorgeschlagen, die Kraft in Aktionsrichtung durch eine manuelle Mechanik auszuführen, die der Aufsitzende bei Bedarf betätigt. Zudem wird vorgeschlagen, die Kraft in Aktionsrichtung durch eine Aktorik auszuführen, die der Fachmann aus einer Vielzahl der möglichen aktorischen Lösungen auswählt. Es besteht in einer Ausführungsvariante die Möglichkeit, dass das Sitztiefen-Verstelleinrichtungs-Modul 10` ganz oder teilweise unter Vorspannung stehend ausgebildet wird und von einer pneumatischen Blase umgeben ist, sodass eine Verringerung des Volumens der Blase durch Ablassen von Luft einen Verstellweg der mindestens einen seitlichen Stützplatte 10-1 und somit eine reversible Verstellung der auxetische Zellenstruktur ZS10 der Zelleneinheiten E in -x-Richtung in die Verstellposition II bewirkt. Durch Auffüllen der Luft wird die auxetische Zellenstruktur ZS10 wieder in ihre Ausgangsposition I zurückgebracht und die Stirnseite des Sitztiefen-Verstelleinrichtungs-Moduls 10' wird in +x-Richtung in die Ausgangsposition I zurückgedrückt.

### Bezugszeichenliste

- 10: Verstelleinrichtung

- 10`: Sitztiefen-Verstelleinrichtung
- 10-1: Stützelement, Stützplatte
- 10-2: Gelenk, Scharnier
- 12: Sitzteil
- E: Zelleneinheit
- E': Zelleneinheit als Flächenelement
- G: Grenzlinie
- GB: Grenzbereich
- U: Unterschenkel
- x*/y*: Auflageebene
- Y: Zugkraftachse, Aktionsachse, Y-Achse
- X: Reaktionsachse, X-Achse
- Z: Kraftrichtung, Z-Achse
- ZS: Zellenstruktur
- ZS(-): nicht-auxetische Zellenstruktur
- ZS10: auxetische Zellenstruktur in einer Ausführungsform
- ZS10(-): nicht-auxetische Zellenstruktur
- ZS1: auxetische Zellenstruktur
- ZS2: auxetische Zellenstruktur
- ZS3: auxetische Zellenstruktur
- ZS4: auxetische Zellenstruktur
- ZS5: auxetische Zellenstruktur
- Z1: Höhe
- Z2: Höhe
- Z3: Höhe
- I: Ausgangsposition
- II: Verstellposition
- F_{Z}: Aktionskraft

## Patentansprüche

1. Auxetische Verstelleinrichtung (10, 10'), die zumindest teilweise eine auxetische Zellenstruktur (ZS) umfasst, die mehrere eine vorgebbare Geometrie aufweisende Zelleneinheiten (E) aufweist, wobei der auxetischen Zellenstruktur (ZS) in einer Ausgangsposition (I) der Verstelleinrichtung (10, 10') eine Aktionsrichtung (Y) zugeordnet ist, wobei ein Aktor zur Verstellung der auxetischen Zellenstruktur (ZS) in Aktionsrichtung (Y) eine Aktionskraft (Fz) auf die auxetische Zellenstruktur (ZS) ausübt, die quer zur Aktionskraft (Fz) eine auxetische Reaktion der auxetischen Zellenstruktur (ZS) in eine Verstellposition (II) auf einer Reaktionsachse (X) in Reaktionsrichtung bewirkt, die als Verstellachse in einer Verstellrichtung der Verstelleinrichtung (10, 10') vorgesehen ist, wobei die Zelleneinheiten (E) der Zellenstruktur (ZS) über mindestens ein Gelenk (10-2) miteinander verbunden sind, **dadurch gekennzeichnet, dass** die Zelleneinheiten (E) der Zellenstruktur (ZS) über mindestens ein Gelenk (10-2) mit mindestens einem randseitig der Zellenstruktur (ZS) angeordneten Stützelement miteinander verbunden sind.

2. Auxetische Verstelleinrichtung (10, 10') nach Anspruch 1, **dadurch gekennzeichnet, dass** das mindestens eine Stützelement eine Stützplatte (10-1) ist.

3. Auxetische Verstelleinrichtung (10, 10') nach Anspruch 1, **dadurch gekennzeichnet, dass** zumindest die auxetische Zellenstruktur (ZS) und/oder die durch die Zelleneinheiten (E) selbst oder durch die Zelleneinheiten (E) selbst und das mindestens eine Gelenk (10-2) eine Stützstruktur bildet, die im Wesentlichen orthogonal als Normalvektor (Z) zu der Flächenebene (x/y-Ebene) der auxetischen Zellenstruktur (ZS10) eine Abstützkraft bildet, der im Wesentlichen orthogonal zu der Ebene (x/y-Ebene) liegt, welche durch die in Aktionsrichtung (Y) und Reaktionsrichtung (X) definierte Flächenebene (x/y-Ebene) der auxetischen Zellenstruktur (ZS10) gebildet wird.

4. Auxetische Verstelleinrichtung (10, 10') nach Anspruch 1, **dadurch gekennzeichnet, dass** die Zelleneinheiten (E) der Zellenstruktur (ZS) mindestens in einer Ebene (x/y) als Flächenelemente (E`) ausgebildet sind.

5. Auxetische Verstelleinrichtung (10, 10') nach Anspruch 4, **dadurch gekennzeichnet, dass** die mindestens eine Ebene (x/y) der als Flächenelemente (E`) ausgebildeten Zelleneinheiten (E) der Zellenstruktur (ZS) eine Auflageebene (x*/y*) bildet, wodurch die Verstelleinrichtung (10, 10') als Verstell- und Trageinrichtung (10, 10') für ein angrenzendes Bauteil, insbesondere einen Schaum einsetzbar ist.

6. Auxetische Verstelleinrichtung (10, 10') nach Anspruch 5, **dadurch gekennzeichnet, dass** die Zelleneinheiten (E) der Zellenstruktur (ZS) oder die als Flächenelemente (E`) ausgebildeten Zelleneinheiten (E) der Zellenstruktur (ZS) unterschiedliche Höhen (Z1, Z2, Z3) aufweisen, sodass eine höhenvariable von der Auflageebene (x*/y*) abweichende Auflagefläche der Verstelleinrichtung (10, 10') ausbildbar ist.

7. Auxetische Verstelleinrichtung (10, 10') nach Anspruch 2, **dadurch gekennzeichnet, dass** die auxetische Zellenstruktur (ZS) und die mindestens eine Stützplatte (10-1) und das mindestens eine Gelenk (10-2) aus einem einteiligen oder mehrteiligen Spritzgussteil ausgebildet ist/sind.

8. Verwendung einer auxetischen Verstelleinrichtung (10, 10') nach mindestens einem der Ansprüche 1 - 7, **dadurch gekennzeichnet, dass** die auxetische Verstelleinrichtung (10, 10') oder eine Kombination aus der auxetischen Verstelleinrichtung (10, 10') und einer nicht-auxetischen Struktur (ZS10(-)) als Verstelleinrichtung mindestens einer Komponente (12) eines Fahrzeugsitzes oder eines Kindersitzes zugeordnet ist.

9. Verwendung der auxetischen Verstelleinrichtung (10, 10') nach Anspruch 8, **dadurch gekennzeichnet, dass** die mindestens eine Komponente ein Sitzteil (12) oder eine Rückenlehne, oder eine Kopfstütze oder eine Seitenwange mindestens einer der zuvor genannten Komponenten ist, sodass die zumindest teilweise auxetische Verstelleinrichtung (10) eine Sitzbreiten-Verstelleinrichtung oder eine Sitzhöhen-Verstelleinrichtung oder eine Sitztiefen-Verstelleinrichtung (10') des Sitzteils (12) oder eine Rückenlehnenbreiten-Verstelleinrichtung oder eine Rückenlehnenhöhen-Verstelleinrichtung oder eine Rückenlehnentiefen-Verstelleinrichtung der Rückenlehne oder eine Kopfstützenbreiten-Verstelleinrichtung oder eine Kopfstützenhöhen-Verstelleinrichtung oder eine Kopfstützentiefen-Verstelleinrichtung oder eine Seitenwangenbreiten-Verstelleinrichtung oder eine Seitenwangenhöhen-Verstelleinrichtung oder eine Seitenwangentiefen-Verstelleinrichtung ist.

## Claims

1. Auxetic adjustment device (10, 10') at least partially comprising an auxetic cell structure (ZS) which has a plurality of cell units (E) having a predeterminable geometry, an action direction (Y) being assigned to the auxetic cell structure (ZS) in an initial position (I) of the adjustment device (10, 10'), an actuator exerting an action force (F_{z}) on the auxetic cell structure (ZS) in order to adjust the auxetic cell structure (ZS) in the action direction (Y), which force, transversely to the action force (F_{z}), causes an auxetic reaction of the auxetic cell structure (ZS) into an adjustment position (II) on a reaction axis (X) in the reaction direction, which is provided as an adjustment axis in an adjustment direction of the adjustment device (10, 10'), the cell units (E) of the cell structure (ZS) being connected to one another via at least one joint (10-2), **characterized in that** the cell units (E) of the cell structure (ZS) are connected to one another via at least one joint (10-2) with at least one support element arranged at the edge of the cell structure (ZS).

2. Auxetic adjustment device (10, 10') according to claim 1,
**characterized in that** the at least one support element is a support plate (10-1).

3. Auxetic adjustment device (10, 10') according to claim 1,
**characterized in that** at least the auxetic cell structure (ZS) and/or the by means of the cell units (E) themselves or by means of the cell units (E) themselves and the at least one joint (10-2) forms a support structure, which, substantially orthogonally as a normal vector (Z) to the plane (x/y plane) of the auxetic cell structure (ZS10), forms a supporting force which is substantially orthogonal to the plane (x/y plane) formed by the surface plane (x/y plane) of the auxetic cell structure (ZS10) that is defined in the action direction (Y) and reaction direction (X).

4. Auxetic adjustment device (10, 10') according to claim 1,
**characterized in that** the cell units (E) of the cell structure (ZS) are formed at least in one plane (x/y) as surface elements (E').

5. Auxetic adjustment device (10, 10') according to claim 4,
**characterized in that** the at least one plane (x/y) of the cell units (E) of the cell structure (ZS) that are formed as planar elements (E') forms a support plane (x*/y*), as a result of which the adjustment device (10, 10') can be used as an adjustment and supporting device (10, 10') for an adjacent component, in particular a foam.

6. Auxetic adjustment device (10, 10') according to claim 5,
**characterized in that** the cell units (E) of the cell structure (ZS) or the cell units (E) of the cell structure (ZS) that are formed as planar elements (E') have different heights (Z1, Z2, Z3), so that a height-variable contact surface of the adjustment device (10, 10'), which deviates from the support plane (x*/y*), can be formed.

7. Auxetic adjustment device (10, 10') according to claim 2,
**characterized in that** the auxetic cell structure (ZS) and the at least one support plate (10-1) and the at least one joint (10-2) is/are formed from a one-part or multipart injection molded part.

8. Use of an auxetic adjustment device (10, 10') according to at least one of claims 1-7, **characterized in that** the auxetic adjustment device (10, 10') or a combination of the auxetic adjustment device (10, 10') and a non-auxetic structure (ZS10 (-)) is associated with at least one component (12) of a vehicle seat or a child seat as an adjustment device.

9. Use of the auxetic adjustment device (10, 10') according to claim 8, **characterized in that** the at least one component is a seat part (12) or a backrest, or a headrest or a side bolster of at least one of the aforementioned components, so that the at least partially auxetic adjustment device (10) is a seat width adjustment device or a seat height adjustment device or a seat depth adjustment device (10') of the seat part (12), or a backrest width adjustment device or a backrest height adjustment device or a backrest depth adjustment device of the backrest, or a headrest width adjustment device or a headrest height adjustment device or a headrest depth adjustment device or a side bolster width adjustment device or a side bolster height adjustment device or a side bolster depth adjustment device.

## Revendications

1. Dispositif de réglage auxétique (10, 10') qui comprend au moins partiellement une structure cellulaire auxétique (ZS), qui présente plusieurs unités cellulaires (E) présentant une géométrie pouvant être prédéfinie, dans lequel une direction d'action (Y) est associée à la structure cellulaire auxétique (ZS) dans une position initiale (I) du dispositif de réglage (10, 10'), dans lequel un actionneur exerce, pour le réglage de la structure cellulaire auxétique (ZS) dans la direction d'action (Y), une force d'action (F_{z}) sur la structure cellulaire auxétique (ZS), qui agit transversalement à la force d'action (F_{z}) d'une réaction auxétique de la structure cellulaire auxétique (ZS) dans une position de réglage (II) sur un axe de réaction (X) dans une direction de réaction, qui est prévu comme axe de réglage dans une direction de réglage du dispositif de réglage (10, 10'), dans lequel les unités cellulaires (E) de la structure cellulaire (ZS) sont reliées les unes aux autres par l'intermédiaire d'une articulation (10-2), **caractérisé en ce que** les unités cellulaires (E) de la structure cellulaire (ZS) sont reliées les unes aux autres par l'intermédiaire d'au moins une articulation (10-2) comportant au moins un élément de support agencé côté bord de la structure cellulaire (ZS).

2. Dispositif de réglage auxétique (10, 10') selon la revendication 1, **caractérisé en ce que** l'au moins un élément de support est une plaque de support (10-1).

3. Dispositif de réglage auxétique (10, 10') selon la revendication 1,
**caractérisé en ce qu'**au moins la structure cellulaire auxétique (ZS) et/ou par les unités cellulaires (E) elles-mêmes ou par les unités cellulaires (E) elles-mêmes et l'au moins une articulation (10-2) forme une structure de support, qui forme, essentiellement orthogonalement à un vecteur normal (Z) par rapport au plan de surface (plan x/y) de la structure cellulaire auxétique (ZS10) une force de support, laquelle se trouve essentiellement orthogonale au plan (plan x/y), qui est formé par le plan de surface (plan x/y) défini par la direction d'action (Y) et la direction de réaction (X) de la structure cellulaire (ZS10).

4. Dispositif de réglage auxétique (10, 10') selon la revendication 1,
**caractérisé en ce que** les unités cellulaires (E) de la structure cellulaire (ZS) sont formées au moins dans un plan (x/y) comme des éléments de surface (E').

5. Dispositif de réglage auxétique (10, 10') selon la revendication 4,
**caractérisé en ce que** l'au moins un plan (x/y) des unités cellulaires (E) de la structure cellulaire (ZS) formées comme des éléments de surface (E') forment un plan d'appui (x*/y*), moyennant quoi le dispositif de réglage (10, 10') peut être utilisé comme dispositif de réglage et porteur (10, 10') pour un composant adjacent, en particulier une mousse.

6. Dispositif de réglage auxétique (10, 10') selon la revendication 5,
**caractérisé en ce que** les unités cellulaires (E) de la structure cellulaire (ZS) ou les unités cellulaires (E) de la structure cellulaire (ZS) formées comme des éléments de surface (E') présentent des hauteurs différentes (Z1, Z2, Z3), de sorte qu'une surface d'appui du dispositif de réglage (10, 10') à hauteur variable s'écartant du plan d'appui (x*/y*) peut être formée.

7. Dispositif de réglage auxétique (10, 10') selon la revendication 2,
**caractérisé en ce que** la structure cellulaire auxétique (ZS) et l'au moins une plaque de support (10-1) et l'au moins une articulation (10-2) sont formées d'une pièce moulée par injection en une ou plusieurs parties.

8. Utilisation d'un dispositif de réglage auxétique (10, 10') selon au moins l'une des revendications 1 à 7, **caractérisée en ce que** le dispositif de réglage auxétique (10, 10') ou une combinaison du dispositif de réglage auxétique (10, 10') et d'une structure non auxétique (ZS10 (-)) est associé en tant que dispositif de réglage à au moins un composant (12) d'un siège de véhicule ou d'un siège pour enfant.

9. Utilisation du dispositif de réglage auxétique (10, 10') selon la
revendication 8, **caractérisée en ce que** l'au moins un composant est une pièce de siège (12) ou un dossier ou un appuie-tête ou un longeron latéral d'au moins un des composants précités, de sorte que le dispositif de réglage (10) au moins partiellement auxétique est un dispositif de réglage de largeur de siège ou un dispositif de réglage de hauteur de siège ou un dispositif de réglage de profondeur de siège (10') de la pièce de siège (12) ou un dispositif de réglage de largeur de dossier ou un dispositif de réglage de hauteur de dossier ou un dispositif de réglage de profondeur de dossier du dossier ou un dispositif de réglage de largeur d'appuie-tête ou un dispositif de réglage de hauteur d'appuie-tête ou un dispositif de réglage de profondeur d'appuie-tête ou un dispositif de réglage de largeur de longeron latéral ou un dispositif de réglage de hauteur de longeron latéral ou un dispositif de réglage de profondeur de longeron latéral.
